# EUROPÄISCHE PATENTSCHRIFT

(11) **EP 1 720 676 B1**
(45) Veröffentlichungstag und Bekanntmachung des Hinweises auf die Patenterteilung: **07.01.2009**
(21) Anmeldenummer: 05708022.8
(22) Anmeldetag: 16.02.2005
(51) Int. Cl.: B22F 3/105, A61C 13/00

(54) **VERFAHREN UND EINRICHTUNG ZUM ERZEUGEN VON STEUERUNGSDATENSÄTZEN FÜR DIE HERSTELLUNG VON PRODUKTEN DURCH FREIFORM-SINTERN BZW. -SCHMELZEN SOWIE VORRICHTUNG FÜR DIESE HERSTELLUNG**
METHOD AND DEVICE USED TO PRODUCE A SET OF CONTROL DATA FOR PRODUCING PRODUCTS BY FREE-FORM SINTERING AND/OR MELTING, IN ADDITION TO A DEVICE FOR THE PRODUCTION THEREOF
PROCEDE ET DISPOSITIF POUR GENERER DES ENREGISTREMENTS DE COMMANDE POUR PRODUIRE DES ARTICLES PAR FRITTAGE OU COULEE SANS MATRICE, AINSI QUE DISPOSITIF POUR CETTE PRODUCTION

(30) Priorität: 25.02.2004 DE 102004009126
(43) Veröffentlichungstag der Anmeldung: 15.11.2006
(73) Patentinhaber: BEGO Medical GmbH, 28359 Bremen (DE)
(72) Erfinder: UCKELMANN, Ingo, 28309 Bremen (DE); HAGEMEISTER, Frank, 28215 Bremen (DE); VAGT, Carsten, 28876 Oyten (DE)
(74) Vertreter: Eisenführ, Speiser & Partner
(86) Internationale Anmeldenummer: PCT/EP2005/050668
(87) Internationale Veröffentlichungsnummer: WO 2005/080029

(56) Entgegenhaltungen:
- EP-A- 1 021 997
- US-A- 5 555 481
- US-A- 5 749 041
- US-A1- 2002 145 213

## Beschreibung

Die Erfindung betrifft ein Verfahren sowie eine Einrichtung zum Erzeugen von Steuerungsdatensätzen für die Herstellung von metallischen und/oder nicht-metallischen Produkten, insbesondere Dentalprodukten oder medizinischen Produkten, durch Freiform-Sintem und/oder -Schmelzen mittels eines hochenergetischen Strahls, insbesondere Laser- oder Elektronenstrahls, wobei ein Produkt mittels dieses anhand eines Steuerungsdatensatzes geführten Strahls aus einem schichtweise aufzubringenden Werkstoff Schicht für Schicht aufgebaut wird. Das Verfahren umfasst dabei die Schritte des Einlesens eines Produktsollgeometriedatensatzes, der die Sollgeometrie des herzustellenden Produkts repräsentiert und des Erzeugens des Steuerungsdatensatzes ausgehend von dem Produktsollgeometriedatensatz. In entsprechender Weise weist die Einrichtung zum Erzeugen von Steuerungsdatensätzen Mittel zum Einlesen eines Produktsollgeometriedatensatzes, der die Sollgeometrie des herzustellenden Produkts repräsentiert, und Mittel zum Erzeugen des Steuerungsdatensatzes ausgehend von dem Produktsolldatensatz auf.

Die Erfindung betrifft ferner eine Vorrichtung zum Herstellung derartiger Produkte durch Freiform-Sintern und/oder -Schmelzen mittels eines hochenergetischen Strahls, insbesondere Laser- oder Elektronenstrahls, wobei die Vorrichtung aufweist: eine Strahlquelle zum Erzeugen dieses Strahls, eine Plattform zur Aufnahme eines schichtweise aufbringbaren Werkstoffs und eine Steuerung zum Steuern des Strahls, mittels derer der Strahl dateng esteuert geführt werden kann, um ein Produkt aus dem Werkstoff Schicht für Schicht aufzubauen.

Derartige Verfahren, Einrichtungen und Vorrichtungen sind bekannt Sie werden unter anderem im Bereich der Herstellung von Dentalprodukten, wie beispielsweise Zahnkronen, Zahnbrücken, Implantaten, etc. eingesetzt. Sie können aber auch für andere Produkte verwendet werden.

Regelmäßig werden jedoch an die Präzision und Maßhaltigkeit derartiger Produkte hohe Anforderungen gestellt. Insbesondere im Bereich der Herstellung von Dentalprodukten werden Genauigkeiten von weniger als einem Zehntel Millimeter angestrebt. Derart hohe Genauigkeiten werden jedoch von den bekannten Sinter- bzw. Schmelzsystemen nicht in ausreichendem Maße erzielt

Document US 20020145213 offenbart ein Verfahren gemäß dem Oberbegriff des Anspruchs 1.

Der Erfindung liegt daher das technische Problem zugrunde, die Maßhaltigkeit der durch Freiform-Sintern und/oder -Schmelzen mittels eines hochenergetischen Strahls, insbesondere Laser- oder Elektronenstrahls, hergestellten Produkte zu verbessern.

Die Erfindung löst dieses Problem bei einem Verfahren gemäß Anspruch 1.

Die Erfindung löst dieses Problem ferner durch eine Einrichtung gemäß Anspruch 14.

Schließlich löst die Erfindung dieses Problem durch eine Vorrichtung der eingangs genannten Art, bei der die Steuerung eine vorstehend bezeichnete Einrichtung zum Erzeugen von Steuerungsdaten zum Führen des Strahls aufweist.

Die Erfindung hat erkannt, dass fertigungstechnisch bedingte Einflüsse, das heißt durch Sintern und/oder -Schmelzen mittels eines hochenergetischen Strahls bedingte Einflüsse, die Maßhaltigkeit der herzustellenden Produkte negativ beeinflussen können.

Beim Freiform-Sintern bzw. -Schmelzen mittels eines hochenergetischen Strahls wird ein Produkt dadurch gebildet, dass ein hochenergetischer Strahl, bspw. Laserstrahl oder Elektronenstrahl, einen in der Regel pulverförmig vorliegenden Werkstoff abschnittsweise bestrahlt, wodurch der Werkstoff erhitzt und aufgeschmolzen wird, so dass er sich mit dem jeweils benachbarten Werkstoff verbindet

Dieser schichtweise Aufbau führt jedoch dazu, dass bei Produkten mit zur Horizontalen bzw. Vertikalen geneigten (seitlichen) Abschnitten eine neu aufzubringende Schicht sich in einen Bereich erstreckt, unterhalb dessen sich kein Abschnitt des herzustellenden Produkts befindet Das heißt die neu herzustellende Schicht steht seitlich gegenüber der zuvor hergestellten Schicht hervor.

Die Erfindung hat aber erkannt, dass in diesen hervorstehenden Bereichen aufgeschmolzenes Werkstoffmaterial sich in den Bereich der darunter liegenden Schicht erstreckt. In diesem Bereich entstehen sogenannte Schmelzkugeln, das heißt kugel- bzw. teilkugelförmige Ausstülpungen des Produkts, welche die Abmessungen des Produkts verfälschen. In diesen Bereichen wird das Produkt dadurch dicker als ursprünglich geplant

Die Erfindung hat ferner erkannt, dass infolge des schichtweisen Aufbaus und des Verbindens von Schichten unterschiedlicher Temperatur wegen einer unterschiedlichen Wärmeausdehnung innerhalb der verschiedenen Schichten Spannungen innerhalb der Schichten entstehen. Diese Spannungen führen zu Verformungen, sobald das Produkt von einem Träger, der sogenannten Substratplatte, gelöst wird.

Die durch diese beispielhaft aufgezeigten Einflüsse entstehenden Veränderungen des tatsächlich hergestellten Produkts gegenüber dem geplanten Produkt werden gemäß der Erfindung dadurch kompensiert, dass zunächst ein Kompensationsdatensatz und/oder eine Kompensationsfunktion ermittelt wird. Anschließend wird dieser Kompensationsdatensatz mit dem Datensatz der Produktsollgeometrie verknüpft bzw. die Kompensationsfunktion auf diesen Produktsollgeometriedatensatz angewendet um den Steuerungsdatensatz zu erzeugern, mittels dessen der hochenergetische Strahl während des Sinterns und/oder Schmelzens geführt wird.

Dank der somit ermittelten Kompensationsfunktion bzw. des Kompensationsdatensatzes können die negativen fertigungstechnischen Einflüsse des Sinterns bzw. Schmelzens mittels eines hochenergetischen Strahls weitgehend ausgeglichen werden, so dass die Maßhaltigkeit substantiell erhöht werden kann.

Bevorzugt wird der Kompensationsdatensatz bzw. die Kompensationsfunktion in Abhängigkeit von der Größe und der Form bzw. einem Neigungswinkel einer tangential an einer äußeren Oberfläche des herzustellenden Produkts anliegenden Ebene zu einer Bezugsebene, bspw. einer horizontalen Bezugsebene, ermittelt Dabei wird insbesondere eine senkrecht zu dieser tangentialen Ebene bestimmte Dicke des herzustellenden Produkts mittels des Kompensationsdatensatzes bzw. der Kompensationsfunktion in Abhängigkeit dieses Neigungswinkels reduziert. Auf diese Weise kann der Einfluss der o.g. Schmelzkugeln bzw. Schmelzteilkugeln auf die Dicke des herzustellenden Produkts bzw. Produktabschnitts ausgeglichen werden. Etwaige Fehler bezüglich der Abmessungen des Produkts, insbesondere im Bereich geneigter Abschnitte, werden somit weitestgehend vermieden.

Bevorzugt ist die Kompensationsfunktion stetig und differenzierbar. Insbesondere weist die Kompensationsfunktion ein Polynom zweiten, dritten, vierten und/oder höheren Grades auf. Es hat sich gezeigt, dass mittels einer derartigen Kompensationsfunktion die Effekte der unterschiedlichen temperaturbedingten und geometriebedingten Spannungen, die durch den schichtweisen Aufbau des Produkts entstehen, zufriedenstellend kompensiert werden können.

Bei einer besonderen Ausführungsform werden mehrere Kompensationsfunktionen jeweils für unterschiedliche Bereiche des herzustellenden Produkts verwendet. Bei einer weiteren Ausführungsform ist der Grad des Polynoms einer solchen Kompensationsfunktion ebenfalls abhängig von dem jeweiligen Bereich des herzustellenden Produkts.

Bei einer weiteren bevorzugten Ausführungsform wird für Bereiche des herzustellenden Produkts mit einfacher Geometrie ein Polynom niedrigen Grades und für Bereiche des herzustellenden Produkts mit komplexerer Geometrie ein Polynom höheren Grades verwendet. Der Grad des jeweiligen Polynoms bestimmt auch den Rechenaufwand. Der Rechenaufwand steigt naturgemäß mit dem Grad des Polynoms. Daher wird vorteilhafterweise nur ein derartiges Polynom verwendet, das einen möglichst geringen Grad aufweist, so dass zufriedenstellende Kompensationsergebnisse erreicht werden können. Da die Effekte der temperaturbedingten Spannungen aber von der Geometrie des herzustellenden Produkts abhängen, sind die Auswirkungen dieser Spannungen an unterschiedlichen Bereichen des herzustellenden Produkts ebenfalls unterschiedlich. Es genügt daher in der Regel bei kompakteren Geometrien eine einfachere Kompensationsfunktion zu verwenden und bei komplexere bzw. filigraneren Geometrien eine komplexere Kompensationsfunktion. Somit kann auf vorteilhafte Weise der Rechenaufwand reduziert und somit die Effizienz der verwendeten Sinter- bzw. Schmelzvorrichtung erhöht werden.

Bei einer weiteren besonderen Ausführungsform wird nur für bestimmte Bereiche des herzustellenden Produkts die Kompensationsfunktion auf den Produktgeometriedatensatz angewendet Bspw. wird nur für Verbinderbereiche einer herzustellenden dentalen Brücke als Zahnersatz die Kompensationsfunktion auf den Produktgeometriedatensatz angewendet Bei derartigen herzustellenden Produkten hat sich nämlich gezeigt, dass sich besondere Spannungen in diesen Verbinderbereichen ergeben, während die Spannungen in den relativ kompakt ausgebildeten, einen Zahn repräsentierenden Bereichen die Effekte der temperaturbedingten Spannungen wesentlich weniger schwerwiegend ausfallen. Mit einer derartigen selektiven Anwendung der Kompensationsfunktion kann ebenfalls der Rechenaufwand reduziert und damit die Rechenleistung der verwendeten Vorrichtung besser ausgenutzt werden.

Besonders bevorzugt wird der Kompensationsdatensatz und/oder die Kompensationsfunktion anhand von wenigstens einem Parameter von einer Gruppe von Parametern ermittelt, die folgendes umfasst: den Elastizitätsmodul, die Solidustemperatur, den Wärmeausdehnungskoeffizienten, die Zugfestigkeit und die elastische Dehngrenze des Werkstoffs; eine Bearbeitungskammertemperatur, welche die Temperatur innerhalb einer den zu bearbeitenden Werkstoff umgebenden Bearbeitungskammer repräsentiert; eine Bearbeitungstemperatur, welche die Temperatur des vom hochenergetischen Strahl bestrahlten Bereichs des Werkstoffs repräsentiert; die Schichtdicke, welche die Dicke einer aufgebrachten Werkstoffschicht repräsentiert; die Leistung der Strahlquelle, insbesondere des Lasers oder der Elektronenstrahlquelle, bzw. die Leistung des Strahls, insbesondere des Laserstrahls bzw. des Elektronenstrahls, während des Vorgangs des Sinterns bzw. Schmelzens; die Verfahrgeschwindigkeit des Strahls; die Bestrahlungsstrategie; die Geometrie und insbesondere die Höhe des herzustellenden Produkts sowie die Art einer etwaigen Nachbehandlung des Produkts nach dem Sintern bzw. Schmelzen. Es hat sich gezeigt, dass durch Berücksichtigung dieser Parameter bzw. eines Teils dieser Parameter eine substantielle Kompensation der fertigungstechnisch bedingten Einflüsse erzielt werden kann.

Bei einer weiteren bevorzugten Ausführungsform wird während und/oder nach dem Bestrahlen einer Werkstoffschicht eine entstehende bzw. entstandene Kontur des Produkts optisch vermessen. Die auf diese Weise gewonnenen Messdaten werden mit den Daten des Produktsollgeometriedatensatzes verglichen. Beim Feststellen einer Abweichung wird der Steuerungsdatensatz entsprechend der festgestellten Abweichung korrigiert. Durch ein derartiges optisches Vermessen des Produkts während seiner Entstehung und gleichzeitig vorgenommener Korrekturen der Steuerungsdaten kann die Genauigkeit und Maßhaltigkeit des herzustellenden Produkts auf vorteilhafte Weise weiter verbessert werden.

Weitere bevorzugte Ausführungsformen ergeben sich aus den anhand der beigefügten Zeichnungen näher erläuterten Ausführungsbeispiele. Es zeigt
- Fig. 1: eine schematische Schnittansicht einer Vorrichtung zum Herstellen von Produkten durch Freiform-Lasersintern und/oder -schmelzen gemäß einem Ausführungsbeispiel der Erfindung;
- Fig. 2: eine schematische Schnittansicht zur Veranschaulichung des schichtweisen Aufbaus von mittels einer Vorrichtung gemäß Fig. 1 hergestellten Produkten gemäß einem idealen theoretischen Modell;
- Fig. 3: eine Fig. 2 entsprechende schematische Darstellung eines real hergestellten Produktes;
- Fig. 4: eine schematische seitliche Schnittansicht einer ersten lasergesinterten bzw. lasergeschmolzenen Schicht des herzustellenden Produktes, das mittels mehrerer Stützen mit einer darunter liegenden Substratplatte verbunden ist;
- Fig. 5: das Produkt aus Fig. 4 mit einer weiteren aufgebrachten Schicht;
- Fig. 6: das Produkt aus Fig. 5, jedoch im von den Stützen abgetrennten Zustand und
- Fig. 7: ein Flussdiagramm zur Veranschaulichung der Verfahrensschritte eines Verfahrens zum Erzeugen von Steuerungsdatensätzen für den Laserstrahl gemäß einem Ausführungsbeispiel der Erfindung.

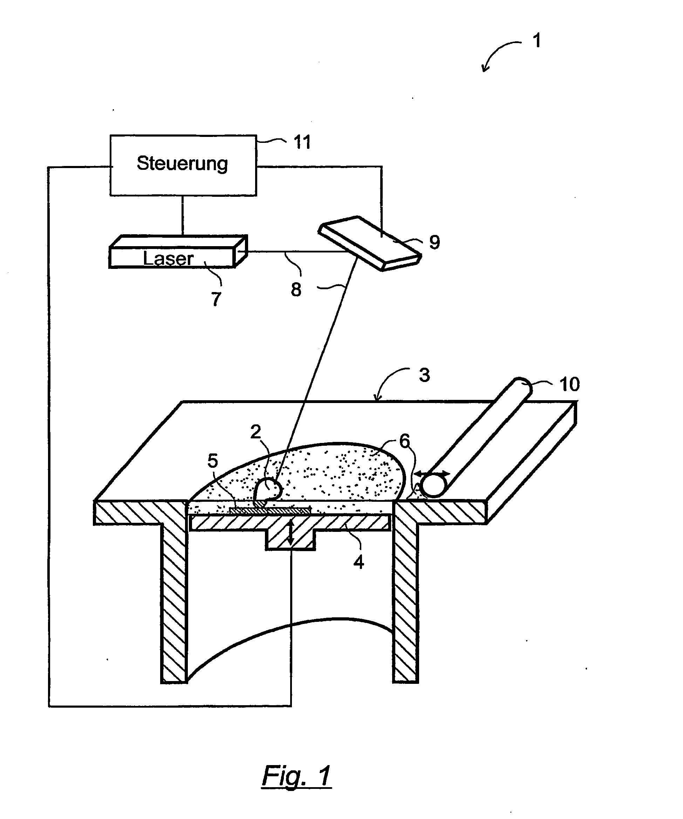

Fig. 1 zeigt eine Vorrichtung 1 zum Herstellen von metallischen und/oder nicht-metallischen Produkten 2, insbesondere von Dentalprodukten, wie Zahnkronen, -brücken, -implantaten etc., oder medizinischen Produkten, wie z.B. Prothesen, durch Freiform-Lasersintem und/oder -schmelzen. Die Vorrichtung 1 weist einen Tisch 3 mit einer höhenverstellbaren Plattform 4 auf, auf der eine Substratplatte 5 liegt Die Plattform 4 ist über einen nicht dargestellten Antrieb in ihrer Höhe schrittweise, insbesondere in an die Größe von Pulverkörnern eines in Pulverform vorliegenden Werkstoffs 6 angepassten Schritten, verstellbar.

Die Vorrichtung 1 weist ferner einen oberhalb des Tisches 3 angeordneten Laser 7, beispielsweise einen CO₂-Laser, auf, dessen Strahl 8 durch eine geeignete Vorrichtung, insbesondere ein computergesteuertes Spiegelgalvan o-meter 9, geführt wird.

Die Vorrichtung 1 weist ferner einen Beschichtungsmechanismus 10 auf, mittels dessen der pulverförmige Werkstoff 6 gleichmäßig über die Oberfläche des Tisches 3 verteilt wird, so dass insbesondere der Raum zwischen der Oberfläche der Plattform 4 und der Oberfläche des Tisches 3 bis an die Oberfläche des Tisches 3 mit pulverförmigem Werkstoff 6 aufgefüllt wird.

Die Herstellung eines Produkts 2 verläuft wie folgt: Zunächst befindet sich die Plattform 4 in einer oberen Ausgangsposition. Sodann wird der Laser 7 aktiviert und sein Laserstrahl 8 auf den pulverförmigen Werkstoff 6 gerichtet. Der Laserstrahl 7 verfestigt und schmilzt aufgrund der von ihm erzeugten Hitze den pulverförmigen Werkstoff 6, der - je nach Höhe der auf den pulverförmigen Werkstoff 6 aufgebrachten Energie - mit umgebenden Pulverkörnern gesintert bzw. verschmolzen wird. Der Laserstrahl 8 wird mittels eines Steuerungsdatensatzes geführt. Er bestrahlt entsprechend dieser Führung vorbestimmte Positionen des pulverförmigen Werkstoffs 6. An den vom Laserstrahl 8 bestrahlten Bereichen entsteht eine feste Schicht verschmolzenen oder gesinterten Werkstoffmaterials.

Sobald eine Schicht fertiggestellt ist, wird der Laser 7 deaktiviert und die Plattform 4 um eine Schichtdicke, die beispielsweise an den durchschnittlichen Durchmesser der Pulverkörner des Werkstoffs 6 angepasst ist, abgesenkt. Mittels des Beschichtungsmechanismus 10 wird anschließend eine neue Schicht pulverförmigen Werkstoffs 6 aufgetragen und glattgestrichen. Sodann wird der Laser 7 erneut aktiviert und der Laserstrahl 7 fährt erneut computergesteuert vorbestimmte Positionen ab, innerhalb derer der pulverförmige Werkstoff 6 mit der zuvor erzeugten Schicht verschmolzen oder aufgesintert wird, oder auch an hieran angrenzende oder auch nicht-angrenzende Bereiche. Dieser Prozess des Auftragens von Schichten von pulverförmigem Ausgangsmaterial 6 und des Sinterns bzw. Schmelzens dieser Schichten mit den zuvor aufgebrachten Schichten mittels des Laserstrahls 8 wird wiederholt durchgeführt, bis sich das Produkt 2 in der gewünschten Form ausgebildet hat.

Die Vorrichtung 1 weist eine Steuerung 11 auf, mittels derer insbesondere die Aktivierung und die Deaktivierung des Lasers 7 sowie die Positionierung des Laserstrahls 8 über das Spiegelgalvanometer 9 und die Höhenverstellung der Plattform 4 gesteuert wird. Die Koordinierung dieser Komponenten der Vorrichtung 1 gewährleistet im wesentlichen die gewünschte Ausbildung der Produkte 2.

Die Steuerung 11 weist Mittel zum Einlesen eines Datensatzes von Produktsollgeometriedaten auf, welche die Sollgeometrie des herzustellenden Produktes repräsentieren. Die Steuerung errechnet ausgehend von diesen Sollgeometriedaten einen Steuerungsdatensatz, mittels dessen der Laserstrahl geführt wird. Beispielsweise weist dieser Steuerungsdatensatz Daten zur Verstellung des Spiegelgalvanometers 10 auf, mittels dessen der Auftreffpunkt des Laserstrahls 9 auf der obersten Schicht des Werkstoffs 6 bestimmt wird.

Die Steuerung 11 ermittelt des weiteren einen Kompensationsdatensatz und/oder eine Kompensationsfunktion von nachfolgend beschriebenen fertigungstechnischen Einflüssen, die beim Lasersintern bzw. Laserschmelzen auftreten. Diese Kompensationsdaten werden mit den Sollgeometriedaten verknüpft bzw. es wird die Kompensationsfunktion auf den Sollgeometriedatensatz angewendet, um den vorstehend erläuterten Steuerungsdatensatz zu erzeugen. Auf diese Weise können die nachfolgend detaillierter beschriebenen fertigungstechnischen Einflüsse des Lasersinterns bzw. Laserschmelzens bereits vor der Herstellung der Produkte 2 bzw. vor der Erzeugung der nächsten zu bildenden Schicht des Produkts 2 berücksichtigt werden.

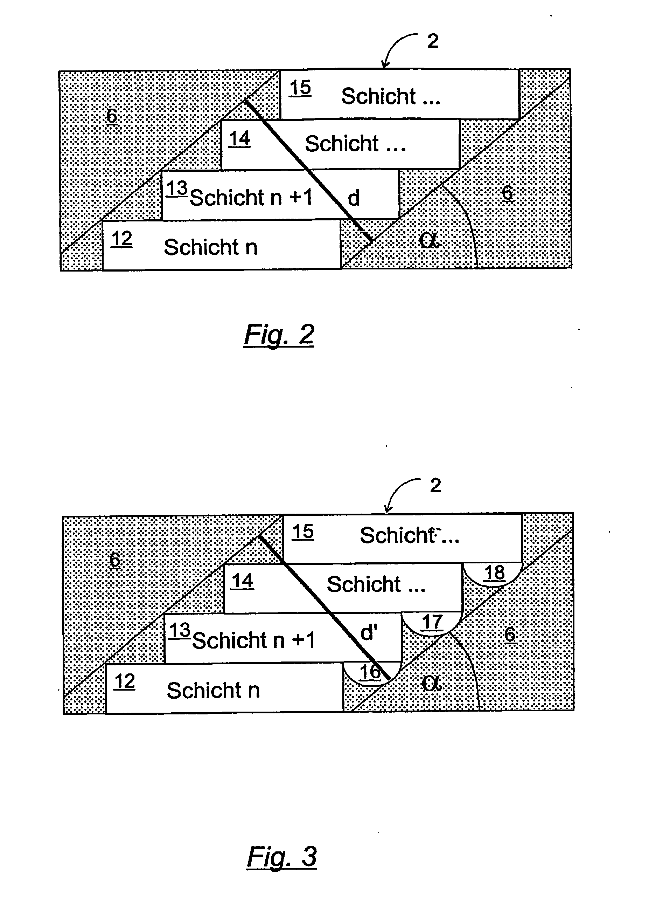

Fig. 2 dient zur Erläuterung eines ersten derartigen fertigungstechnischen Einflusses. Fig. 2 zeigt einen Ausschnitt eines bereits lasergesinterten bzw. lasergeschmolzenen Produktes 2, das in mehreren Schichten 12, 13, 14, 15 herzustellen ist. Die Schichten 12 bis 15 sind jedoch nicht senkrecht übereinanderliegend angeordnet, sondern jeweils gegeneinander versetzt. Durch den entsprechenden Versatz ergibt sich eine Neigung einer an die Enden der Schichten angelegten tangentialen Ebene mit einem Winkel α gegenüber der Horizontalen, beispielsweise der Oberseite der Plattform 4.

In dem in Fig. 2 gezeigten Beispiel weisen die Schichten 12 bis 15 jeweils die gleiche Breite auf, so dass idealer Weise eine schräg gestellte Platte mit der Dicke d entsteht, die gegenüber der horizontalen Ebene den Winkel α ei n-nimmt.

Fig. 3 zeigt das in Fig. 2 theoretisch dargestellte Produkt bei einer praktischen Realisierung. Am rechten Ende der Schichten 13 bis 15, welche jeweils gegenüber der darunter liegenden Schicht 12 bis 14 jeweils um einen bestimmten Abstand versetzt sind, bilden sich während des Lasersinterns bzw. Laserschmelzens sogenannte Schmelzkugeln bzw. Schmelzkugelabschnitte 16, 17, 18. In diesen Bereichen aufgeschmolzener Werkstoff 6 erhitzt nämlich nicht nur exakt das Werkstoffpulver 6 innerhalb der Dicke einer Schicht 13, 14, 15, sondern auch das umgebende Werkstoffpulver 6, welches dabei aufgeschmolzen wird und in der flüssigen Phase nach unten fließt und dabei die Schmelzkugeln 16, 17, 18 bildet.

Die Schmelzkugeln 16 bis 18 führen zu einer vergrößerten Dicke d' gegenüber der in Fig. 2 dargestellten Dicke d.

Dieser fertigungstechnisch bedingter Einfluss auf die Dicke des herzustellenden Produkts ist u.a. abhängig von dem Neigungswinkel α. Je größer der Winkel α, das heißt der Winkel der tangentialen Ebene gegenüber der horizontalen Ebene ist, desto geringer ist die Verfälschung der Dicke d' gegenüber der in Fig. 2 dargestellten theoretischen Dicke d.

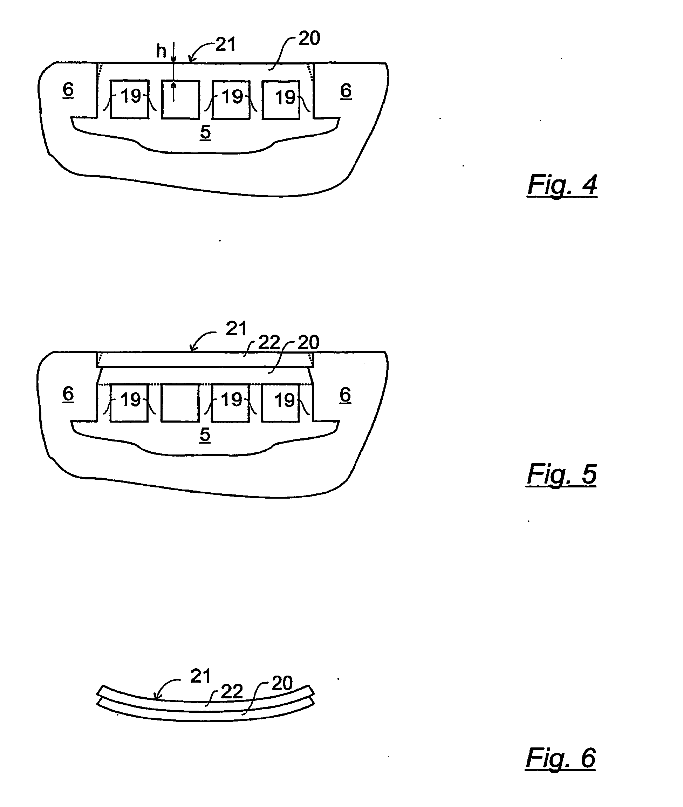

Fig. 4 bis 6 zeigen einen weiteren fertigungstechnisch bedingten Einfluss auf die Maßhaltigkeit des herzustellenden Produkts.

Fig. 4 zeigt mehrere Stützen 19, welche auf eine Substratplatte 5 aufgesintert worden sind, um darauf eine erste Schicht 20 eines herzustellenden Produktes 21 zu bilden. Diese erste Schicht weist eine Höhe h auf. Die Schicht 20 kühlt jedoch nach dem Aufschmelzen ab. Dadurch zieht sich die Schicht 20 infolge der Abkühlung entsprechend ihrem Wärmeausdehnungskoeffizienten zusammen. Die hieraus resultierende Schrumpfung der Schicht vollzieht sich jedoch im oberen Bereich der Schicht 20 im stärkeren Maße als im unteren Bereich der Schicht 20, da der untere Bereich der Schicht 20 infolge der Stützen 19 und damit infolge der Verbindung mit der Substratplatte 5 vergleichsweise starr und daher wesentlich weniger nachgiebig ist. Die obere Seite der Schicht 20 schrumpft jedoch am stärksten. Dies ist in Fig. 4 mittels der gestrichelten Linien an den seitlichen Enden der Schicht 20 dargestellt.

Fig. 5 zeigt, wie auf der bereits abgekühlten Schicht 20 eine weitere, zweite Schicht 22 aufgebracht worden ist, welche wiederum infolge der Abkühlung an ihren seitlichen Enden nach oben hin stärker schrumpft als in ihrem unteren Bereich.

Ein Produkt wird durch eine Vielzahl derartiger Schichten 20, 22 gebildet, die jeweils infolge der Abkühlung und infolge des Wärmeausdehnungskoeffizienten schrumpfen und daher Spannungen innerhalb des herzustellenden Produkts 21 erzeugen.

Es sei jedoch darauf hingewiesen, dass in den Fig. 4, 5 und 6 die Breitenänderungen der Schichten infolge der Abkühlung nicht maßstabsgerecht und stark übertrieben dargestellt sind. Dies dient jedoch zur Veranschaulichung dieses fertigungstechnisch bedingten Einflusses.

Fig. 6 zeigt das Produkt 21 aus Fig. 5, nachdem die unterste Schicht 20 von den Stützen 19 abgetrennt worden sind, beispielsweise entlang der mit Punkten in Fig. 5 dargestellten Linie. Sobald das Produkt 21 von den Stützen 19 abgetrennt ist, verformt es sich infolge der vorstehend erläuterten Spannungen innerhalb der Schichten 20, 22. Das Produkt 21 wird an seinen seitlichen Enden nach dem Abtrennen von den Stützen 19 nach oben gebogen.

Diese Biegung entspricht näherungsweise einer mit einem Polynom zweiten Grades zu beschreibenden Biegelinie.

Dieser Einfluss wird ebenfalls mittels des Kompensationsdatensatzes bzw. der Kompensationsfunktion korrigiert.

Eine Reihe von Parametern haben Einfluss auf die Abweichung eines praktisch hergestellten Produkts von seiner theoretischen Vorplanung. Es handelt sich hierbei insbesondere um folgende Parameter:

Den Elastizitätsmodul, die Solidustemperatur, den Wärmeausdehnungskoeffizienten, die Zugfestigkeit und die elastische Dehngrenze des Werkstoffs, die Temperatur innerhalb der Bearbeitungskammer während der Bearbeitung, die Temperatur des von dem Laserstrahl bestrahlten Bereichs des Werkstoffs 6, die Dicke der Schichten 12 bis 15, 20, 22, die Leistung des Laser 7 bzw. des Laserstrahls 8 während des Lasersinterns bzw. -schmelzens, die Verfahrgeschwindigkeit des Laserstrahls 8, das heißt die Geschwindigkeit, mit der der Laserstrahl auf der Oberfläche des Werkstoffs 6 verfahren wird, die Bestrahlungsstrategie, das heißt in welcher Weise der Laser die vorbestimmten, zu bestrahlenden Punkte ggf. wiederholt anfährt, die Geometrie, insbesondere Höhe des herzustellenden Produkts 2, 21 und die Art einer etwaigen Nachbehandlung des Produkts nach dem Lasersintern bzw. -schmelzen.

Die genannten Parameter haben unterschiedlichen Einfluss auf die Maßhaltigkeit des herzustellenden Produkts. Es ist daher - je nach der gewünschten Präzision des herzustellenden Produkts - nicht erforderlich, jeweils alle Parameter exakt zu bestimmen. Zwar werden die besten Ergebnisse erzielt, wenn alle Parameter berücksichtigt werden. Jedoch führt eine Berücksichtigung aller Parameter zu einem hohen Aufwand, was sich letztlich in deutlich höheren Produktkosten niederschlägt. Daher wird bei einem besonders bevorzugten Ausführungsbeispiel nur eine Auswahl der wichtigsten, das heißt einflussreichsten Parameter berücksichtigt.

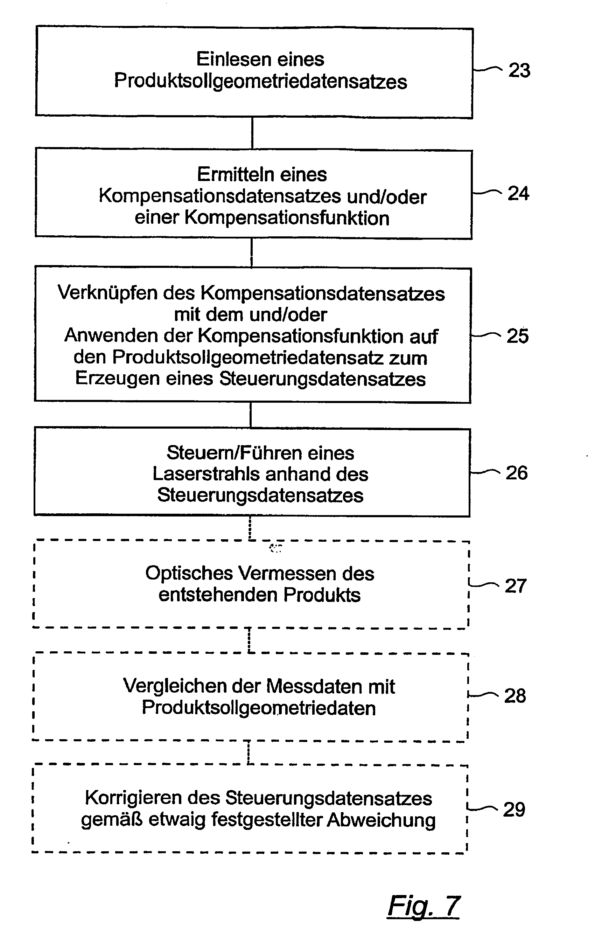

Fig. 7 zeigt ein Flussdiagramm zur Veranschaulichung eines Verfahrens gemäß einem Ausführungsbeispiel der Erfindung. In einem ersten Schritt 23 werden von der Steuerung 11 die Sollgeometriedaten eines herzustellenden Produkts eingelesen. In einem weiteren Schritt 24 ermittelt die Steuerung 11 einen Kompensationsdatensatz und/oder eine Kompensationsfunktion. In einem weiteren Schritt 25 erfolgt eine Verknüpfung des Kompensationsdatensatzes und/oder eine Anwendung der Kompensationsfunktion auf die Sollgeometriedaten des Produkts zum Erzeugen eines Datensatzes zur Steuerung des Laserstrahls 8. In einem weiteren Schritt 26 wird der Laserstrahl 8 anhand dieses Steuerungsdatensatzes gesteuert bzw. geführt.

Bei einem besonderen Ausführungsbeispiel wird während des Lasersinterns bzw. Laserschmelzens in seinem weiteren Schritt 27 das entstehende Produkt optisch vermessen. In einem folgenden Schritt 28 werden die auf diese Weise erhaltenen Messdaten mit den Sollgeometriedaten des Produkts verglichen. In einem anschließenden Schritt 29 werden die Steuerungsdaten gemäß einer etwaig festgestellten Abweichung korrigiert, so dass der Laserstrahl dann anhand eines korrigierten Steuerungsdatensatzes gesteuert bzw. geführt wird.

Insgesamt hat die Erfindung erkannt, dass fertigungstechnisch gedingte Einflüsse des Lasersinterns bzw. Laserschmelzens auf die herzustellenden Produkte durch Manipulation der Steuerungsdaten des Laserstrahls kompensiert werden können und somit die Maßhaltigkeit der herzustellenden Produkte substanziell verbessert werden kann.

Vorstehend wurde die Erfindung zwar im Zusammenhang mit Lasersintern bzw. Laserschmelzen erläutert. Die Erfindung ist jedoch nicht auf die Verwendung eines Laserstrahls zum Sintern bzw. Schmelzen beschränkt. Statt eines Laserstrahls kann z.B. auch ein Elektronenstrahl verwendet werden. Daher kann der vorstehend beschriebene Laser ohne weiteres auch durch eine Elektronenstrahlquelle ersetzt werden. Allgemein bezieht sich daher die Erfindung auf jedwede Art eines Sinter- bzw. Schmelzvorgangs, der durch einen hochenergetischen Strahl aus einer entsprechenden Quelle für einen derartigen hochenergetischen Strahl erzeugt wird.

## Patentansprüche

1. Verfahren zum Erzeugen von Steuerungsdatensätzen für die Herstellung von metallischen und/oder nicht-metallischen Produkten (2, 21), insbesondere Dentalprodukten oder medizinischen Produkten, durch Freiform-Sintem und/oder -Schmelzen mittels eines hochenergetischen Strahls (8), insbesondere Laser- oder Elektronenstrahls, wobei ein Produkt (2, 21) mittels dieses anhand eines Steuerungsdatensatzes geführten Strahls (8) aus einem schichtweise aufzubringenden Werkstoff (6) Schicht für Schicht (12-15, 20, 22) aufgebaut wird, wobei das Verfahren die Schritte umfasst:
Einlesen (23) eines Produktsollgeometriedatensatzes, der die Sollgeometrie des herzustellenden Produkts (2, 21) repräsentiert,
Erzeugen (25) des Steuerungsdatensatzes ausgehend von dem Produktsollgeometriedatensatz,
Ermitteln (24) eines Kompensationsdatensatzes und/oder einer Kompensationsfunktion zur Kompensation von durch das Sintern und/oder Schmelzen bedingten fertigungstechnischen Einflüssen und
Verknüpfen (25) des Kompensationsdatensatzes und/oder Anwenden der Kompensationsfunktion auf den Produktsollgeometriedatensatz zum Erzeugen des Steuerungsdatensatzes,
**dadurch gekennzeichnet, dass** der Kompensationsdatensatz und/oder die Kompensationsfunktion vor Beginn des Freiform-Sinter- und/oder -Schmelzvorgangs aus den Sollwertdaten und gegebenenfalls aus zumindest einem Fertigungsparameter berechnet wird.

2. Verfahren nach Anspruch 1,
**dadurch gekennzeichnet, dass**
der Kompensationsdatensatz bzw. die Kompensationsfunktion in Abhängigkeit von der Größe und der Form des herzustellenden Produkts (2, 21) ermittelt wird.

3. Verfahren nach Anspruch 1 oder 2,
**dadurch gekennzeichnet, dass**
der Kompensationsdatensatz bzw. die Kompensationsfunktion in Abhängigkeit von einem Neigungswinkel (α) einer tangential an einer äußeren Oberfläche des herzustellenden Produkts (2, 21) anliegenden Ebene zu einer Bezugsebene, insbesondere horizontalen Ebene, ermittelt wird.

4. Verfahren nach Anspruch 3,
**dadurch gekennzeichnet, dass**
eine senkrecht zu dieser tangentialen Ebene bestimmte Dicke (d) des herzustellenden Produkts mittels des Kompensationsdatensatzes bzw. der Kompensationsfunktion in Abhängigkeit dieses Neigungswinkels (α) reduziert wird.

5. Verfahren nach einem der vorhergehenden Ansprüche,
**dadurch gekennzeichnet, dass**
der Kompensationsdatensatz und/oder die Kompensationsfunktion zur Kompensation von Verformungen ausgebildet ist, die infolge unterschiedlicher Wärmeausdehnung innerhalb der verschiedenen Schichten entstehen, sobald das hergestellte Produkt von einem Träger gelöst wird.

6. Verfahren nach einem der vorhergehenden Ansprüche,
**dadurch gekennzeichnet, dass**
die Kompensationsfunktion stetig und differenzierbar ist.

7. Verfahren nach Anspruch 6,
**dadurch gekennzeichnet, dass**
die Kompensationsfunktion ein Polynom zweiten, dritten, vierten und/oder höheren Grades aufweist.

8. Verfahren nach Anspruch 7,
**dadurch gekennzeichnet, dass**
für ein Produkt mehrere Kompensationsfunktionen verwendet werden, die sich wenigstens teilweise hinsichtlich ihres Grades unterscheiden.

9. Verfahren nach Anspruch 8,
**dadurch gekennzeichnet, dass**
für Bereiche eines herzustellenden Produkts mit einfacher Geometrie ein Polynom niedrigen Grades und für Bereich des herzustellenden Produkts mit komplexerer Geometrie ein Polynom höheren Grades verwendet wird.

10. Verfahren nach einem der vorhergehenden Ansprüche,
**dadurch gekennzeichnet, dass**
nur für bestimmte Bereiche des herzustellenden Produkts die Kompensationsfunktion auf den Produktgeometriedatensatz angewendet wird.

11. Verfahren nach Anspruch 10,
**dadurch gekennzeichnet, dass**
nur für Verbinderbereiche einer herzustellenden Brücke als Zahnersatz die Kompensationsfunktion auf den Produktgeometriedatensatz angewendet wird.

12. Verfahren nach einem der vorhergehenden Ansprüche,
**dadurch gekennzeichnet, dass**
der Kompensationsdatensatz und/oder die Kompensationsfunktion anhand von wenigstens einem Parameter von einer Gruppe von Parametern ermittelt wird, die folgendes umfasst:
- den Elastizitätsmodul des Werkstoffs (6),
- die Solidustemperatur des Werkstoffs (6),
- den Wärmeausdehnungskoeffizienten des Werkstoffs (6),
- die Zugfestigkeit des Werkstoffs (6),
- die elastische Dehnungsgrenze des Werkstoffs (6),
- eine Bearbeitungskammertemperatur, welche die Temperatur innerhalb einer den zu bearbeitenden Werkstoff (6) umgebenden Bearbeitungskammer repräsentiert,
- eine Bearbeitungstemperatur, welche die Temperatur des von dem Strahl (8) bestrahlten Bereichs des Werkstoffs (6) repräsentiert,
- eine Schichtdicke (d), welche eine Dicke einer aufzubringenden bzw. aufgebrachten Werkstoffschicht (12-15, 20, 22) repräsentiert,
- die Leistung der Strahlquelle, insbesondere des Lasers (7) oder der Elektronenstrahlquelle, bzw. die Leistung des Strahls, insbesondere des Laserstrahls (8) bzw. des Elektronenstrahls, während des Vorgangs des Sinterns bzw. Schmelzens,
- die Verfahrgeschwindigkeit des Strahls (8),
- die Bestrahlungsstrategie,
- die Geometrie des herzustellenden Produkts (2, 21),
- die Höhe des herzustellenden Produkts (2, 21), und
- die Art einer etwaigen Nachbearbeitung des Produkts (2, 21) nach dem Sintern bzw. Schmelzen.

13. Verfahren nach einem der vorhergehenden Ansprüche,
**dadurch gekennzeichnet, dass**
während und/oder nach dem Bestrahlen einer Werkstoffschicht (12-15, 20, 22) eine entstehende bzw. entstanden Kontur des Produkts (2, 21) optisch vermessen wird und die auf diese Weise gewonnenen Messdaten mit den Daten des Produktsollgeometriedatensatzes verglichen und beim Feststellen einer Abweichung der Steuerungsdatensatz entsprechend der festgestellten Abweichung korrigiert wird.

14. Einrichtung zum Erzeugen von Steuerungsdatensätzen für die Herstellung von metallischen und/oder nicht-metallischen Produkten (2, 21), insbesondere Dentalprodukten oder medizinischen Produkten, durch Freiform-Sintem und/oder -Schmelzen mittels eines hochenergetischen Strahls (8), insbesondere Laser- oder Elektronenstrahls, und zur Durchführung eines Verfahrens nach einem der Ansprüche 1 bis 12, wobei ein Produkt (2, 21) mittels dieses anhand eines Steuerungsdatensatzes führbaren Strahls (8) aus einem schichtweise aufbringbaren Werkstoff Schicht für Schicht (12-15, 20, 22) aufbaubar ist,
wobei die Einrichtung (11)
- Mittel zum Einlesen (23) eines Produktsollgeometriedatensatzes, der die Sollgeometrie des herzustellenden Produkts (2, 21) repräsentiert, und
- Mittel zum Erzeugen (25) des Steuerungsdatensatzes ausgehend von dem Produktsollgeometriedatensatz aufweist.
- Mittel zum Ermitteln (24) eines Kompensationsdatensatzes und/oder einer Kompensationsfunktion zur Kompensation von durch Sintern und/oder Schmelzen bedingten fertigungstechnischen Einflüssen und
- Mittel zum Verknüpfen (25) des Kompensationsdatensatzes und/oder Anwenden der Kompensationsfunktion auf den Produktsollgeometriedatensatz zum Erzeugen des Steuerungsdatensatzes,
**dadurch gekennzeichnet, dass**
die Mittel zum Ermitteln des Kompensationsdatensatzes und/oder der Kompensationsfunktion ausgebildet sind, um den Kompensationsdatensatz bzw. die Kompensationsfunktion vor Beginn des Freiform-Sinter und/oder -Schmelzvorgangs aus den Sollwertdaten und gegebenenfalls aus zumindest einem Fertigungsparameter zu berechnen.

15. Vorrichtung zur Herstellung von metallischen und/oder nicht-metallischen Produkten (2, 21), insbesondere Dentalprodukten oder medizinischen Produkten, durch Freiform-Sintem und/oder -Schmelzen mittels eines hochenergetischen Strahls (8), insbesondere Laser- oder Elektronenstrahls, wobei die Vorrichtung aufweist:
- eine Strahlquelle (7), insbesondere ein Laser oder eine Elektronenstrahlquelle, zum Erzeugen dieses Strahls (8),
- eine Plattform (4) zur Aufnahme eines schichtweise aufbringbaren Werkstoffs (6) und
- eine Steuerung (11) zum Steuern des Strahls (8), mittels derer der Strahl (8) datengesteuert geführt werden kann, um ein Produkt aus dem Werkstoff (6) Schicht für Schicht (12-15, 20, 22) aufzubauen,
**dadurch gekennzeichnet, dass**
die Steuerung (11) eine Einrichtung zum Erzeugen von Steuerungsdaten nach Anspruch 14 zum Führen des Strahls (8) aufweist.

## Claims

1. Method of generating control records for production of metallic and/or non-metallic products (2, 21), in particular dental or medical products, by free form sintering and/or melting by means of a high energy beam (8), in particular a laser or electron beam, a product (2, 21) being built up layer by layer (12 - 15, 20, 22) by means of this beam (8), which is guided on the basis of a control record, from a material (6) to be deposited in layers, and the method including the following steps:
reading in (23) a product target geometry record, which represents the target geometry of the product (2, 21) to be produced,
generating (25) the control record, starting from the product target geometry record,
determining (24) a compensation record and/or a compensation function for compensating for production effects caused by the sintering and/or melting, and
linking (25) the compensation record, and/or applying the compensation function to the product target geometry record, to generate the control record,
**characterized in that** before the free form sintering and/or free form melting process begins, the compensation record and/or the compensation function is computed from the setpoint value data, and if required from at least one production parameter.

2. Method according to Claim 1,
**characterized in that**
the compensation record and/or the compensation function is determined depending on the size and shape of the product (2, 21) to be produced.

3. Method according to Claim 1 or 2,
**characterized in that**
the compensation record and/or the compensation function is determined depending on an angle of inclination (α) of a plane, which is tangentially contiguous to an outer surface of the product (2, 21) to be produced, to a reference plane, in particular a horizontal plane.

4. Method according to Claim 3,
**characterized in that**
a thickness (d) of the product to be produced, which is determined perpendicularly to this tangential plane, is reduced by means of the compensation record and/or the compensation function, depending on this angle of inclination (α).

5. Method according to one of the preceding claims,
**characterized in that**
the compensation record and/or the compensation function is designed to compensate for deformations which occur within the various layers because of differential thermal expansion, as soon as the produced product is released from a carrier.

6. Method according to one of the preceding claims,
**characterized in that**
the compensation function is invariable and differentiable.

7. Method according to Claim 6,
**characterized in that**
the compensation function is a polynomial of the second, third, fourth and/or a higher degree.

8. Method according to Claim 7,
**characterized in that**
multiple compensation functions, which differ at least partly regarding their degree, are used for a product.

9. Method according to Claim 8,
**characterized in that**
for regions of a product to be produced with simple geometry, a polynomial of low degree is used, and for regions of the product to be produced with more complex geometry, a polynomial of higher degree is used.

10. Method according to one of the preceding claims,
**characterized in that**
the compensation function is applied to the product geometry record only for specified regions of the product to be produced.

11. Method according to Claim 10,
**characterized in that**
the compensation function is applied to the product geometry record only for connector regions of a bridge to be produced, as a substitute for teeth.

12. Method according to one of the preceding claims,
**characterized in that**
the compensation record and/or the compensation function is determined on the basis of at least one parameter of a group of parameters including the following:
- the modulus of elasticity of the material (6),
- the solidus temperature of the material (6),
- the coefficient of thermal expansion of the material (6),
- the tensile strength of the material (6),
- the elastic elongation limit of the material (6),
- a processing room temperature, representing the temperature within a processing room which surrounds the material (6) to be processed,
- a processing temperature, representing the temperature of the region of the material (6) to be irradiated by the beam (8),
- a layer thickness (d), representing a thickness of a material layer (12 - 15, 20, 22) which is to be deposited or has been deposited,
- the power of the beam source, in particular of the laser (7) or electron beam source, or the power of the beam, in particular of the laser beam (8) or electron beam, during the process of sintering or melting,
- the traversing speed of the beam (8),
- the irradiation strategy,
- the geometry of the product (2, 21) to be produced,
- the height of the product (2, 21) to be produced, and
- the nature of any reworking of the product (2, 21) after the sintering or melting.

13. Method according to one of the preceding claims,
**characterized in that**
during and/or after the irradiation of a material layer (12 - 15, 20, 22), a contour, which is developing or has developed, of the product (2, 21) is measured optically, and the measurement data which are acquired in this way are compared with the data of the product target geometry record, and if a difference from the control record is established, corrected correspondingly to the established difference.

14. Facility for generating control records for production of metallic and/or non-metallic products (2, 21), in particular dental or medical products, by free form sintering and/or melting by means of a high energy beam (8), in particular a laser or electron beam, and for carrying out a method according to one of Claims 1 to 12, it being possible to build up a product (2, 21) layer by layer (12 - 15, 20, 22) by means of this beam (8), which can be guided on the basis of a control record, from a material (6) which can be deposited in layers,
the device (11) having
means for reading in (23) a product target geometry record, which represents the target geometry of the product (2, 21) to be produced,
means for generating (25) the control record, starting from the product target geometry record,
means for determining (24) a compensation record and/or a compensation function for compensating for production effects caused by the sintering and/or melting, and
means for linking (25) the compensation record, and/or applying the compensation function to the product target geometry record, to generate the control record,
**characterized in that**
the means for determining a compensation record and/or a compensation function are designed to compute, before the free form sintering and/or free form melting process begins, the compensation record and/or the compensation function from the setpoint value data and if required from at least one production parameter.

15. Device for producing metallic and/or non-metallic products (2, 21), in particular dental or medical products, by free form sintering and/or melting by means of a high energy beam (8), in particular a laser or electron beam, the device having:
- a beam source (7), in particular a laser or electron beam source, to generate this beam (8),
- a platform (4) to receive a material (6) which can be deposited in layers, and
- a controller (11) to control the beam (8), by means of which the beam (8) can be guided under data control, to build up a product layer by layer (12 - 15, 20, 22) from the material (6),
**characterized in that**
the controller (11) has a facility for generating control data according to Claim 14, to guide the beam (8).

## Revendications

1. Procédé de génération d'ensemble de données de commande pour la fabrication de produits métalliques et/ou non métalliques (2, 21), en particulier des produits dentaires ou des produits médicaux, par frittage et/ou coulée sans matrice au moyen d'un rayon hautement énergétique (8), en particulier un rayon laser ou un faisceau d'électrons, dans lequel un produit (2, 21) est constitué couche par couche (12-15, 20, 22) à partir d'un matériau (6) à fabriquer de façon stratifiée au moyen de ce rayon (8) guidé grâce à un ensemble de données de commande, dans lequel le procédé comprend les étapes consistant à :
entrer (23) un ensemble de données géométriques théorique de produit, qui représente la géométrie théorique du produit à fabriquer (2,21),
générer (25) l'ensemble de données de commande à partir de l'ensemble de données géométriques théorique du produit,
déterminer (24) un ensemble de données de compensation et/ou une fonction de compensation pour la compensation des influences sur le plan de la production dues au frittage et/ou à la coulée et
combiner (25) l'ensemble de données de compensation et/ou utiliser la fonction de compensation et l'ensemble de données géométriques théorique de produits pour générer l'ensemble de données de commande,
**caractérisé en ce que** l'ensemble de données de compensation et/ou la fonction de compensation est calculé(e) avant le début du procédé de frittage et/ou de coulée sans matrice à partir des données de valeur théorique et le cas échéant à partir d'au moins un paramètre de fabrication.

2. Procédé selon la revendication 1, **caractérisé en ce que** l'ensemble de données de compensation ou la fonction de compensation est déterminé(e) selon la taille et la forme du produit à fabriquer (2, 21).

3. Procédé selon la revendication 1 ou 2, **caractérisé en ce que** l'ensemble de données de compensation ou la fonction de compensation est déterminé(e) selon un angle d'inclinaison (α) d'un plan tangentiel en contact d'une surface externe du produit à fabriquer (2, 21) par rapport à un plan de référence, en particulier un plan horizontal.

4. Procédé selon la revendication 3, **caractérisé en ce qu'**une épaisseur (d) définie perpendiculairement à ce plan tangentiel du produit à fabriquer est réduite au moyen de l'ensemble de données de compensation ou de la fonction de compensation selon cet angle d'inclinaison (α).

5. Procédé selon l'une des revendications précédentes, **caractérisé en ce que** l'ensemble de données de compensation et/ou la fonction de compensation est réalisé(e) pour compenser des déformations, qui se produisent suite à une dilatation thermique différente à l'intérieur des différentes couches, dès que le produit fabriqué est séparé du support.

6. Procédé selon l'une des revendications précédentes, **caractérisé en ce que** la fonction de compensation est continue et peut être différenciée.

7. Procédé selon la revendication 6, **caractérisé en ce que** la fonction de compensation présente un polynôme de second, troisième, quatrième degré et/ou de degré supérieur.

8. Procédé selon la revendication 7, **caractérisé en ce que,** pour un produit, plusieurs fonctions de compensation sont utilisées, qui se différencient au moins partiellement par rapport à leur degré.

9. Procédé selon la revendication 8, **caractérisé en ce qu'**un polynôme de degré inférieur est utilisé pour des zones d'un produit à fabriquer avec une géométrie simple et un polynôme de degré supérieur est utilisé pour une zone d'un produit à fabriquer avec une géométrie plus complexe.

10. Procédé selon l'une des revendications précédentes, **caractérisé en ce que** la fonction de compensation sur un ensemble de données de géométrie de produit est utilisée uniquement pour des zones déterminées du produit à fabriquer.

11. Procédé selon la revendication 10, **caractérisé en ce que** la fonction de compensation sur l'ensemble des données de géométrie de produits est utilisée uniquement pour des zones de liaison d'un bridge à fabriquer en tant que prothèse dentaire.

12. Procédé selon l'une des revendications précédentes, **caractérisé en ce que** l'ensemble de données de compensation et/ou la fonction de compensation est défini(e) en regard d'au moins un paramètre parmi un groupe de paramètres, qui comprend ce qui suit :
- le module d'élasticité du matériau (6),
- la température de solidus du matériau (6),
- les coefficients de dilatation thermique du matériau (6),
- la résistance du matériau (6),
- la limite d'allongement élastique du matériau (6),
- une température de chambre de traitement, qui représente la température à l'intérieur d'une chambre de traitement entourant le matériau à traiter (6),
- une température de traitement, qui représente la température d'une zone du matériau (6) irradiée par le rayon (8),
- une épaisseur (d), qui représente une épaisseur d'une couche de matériau à réaliser ou réalisé (12-15, 20, 22),
- la puissance de la source de rayonnement, en particulier le laser (7) ou la source de faisceau d'électrons, ou la puissance du rayon, en particulier du rayon laser (8) ou du faisceau d'électrons, pendant le processus de frittage ou de coulée,
- la vitesse de déplacement du rayon (8),
- la stratégie de rayonnement,
- la géométrie du produit à fabriquer (2, 21),
- la hauteur du produit à fabriquer (2, 21), et
- le type d'un post-traitement éventuel du produit (2, 21) après le frittage ou la coulée.

13. Procédé selon l'une des revendications précédentes, **caractérisé en ce que,** pendant et/ou après l'irradiation d'une couche de matériau (12-15, 20, 22), un contour se produisant ou produit du produit (2, 21) est mesuré optiquement et les données de mesure obtenues de cette manière sont comparées aux données de l'ensemble de données de géométrie théorique du produit et sont corrigées lors de la constatation d'un écart avec l'ensemble de données de commande de façon appropriée par rapport à l'écart constaté.

14. Dispositif pour générer des ensembles de données de commande pour la fabrication de produits métalliques et/ou non métalliques (2, 21), en particulier des produits dentaires ou des produits médicaux, par frittage et/ou coulée sans matrice au moyen d'un rayon hautement énergétique (8), en particulier un rayon laser ou un faisceau d'électrons, et pour exécuter un procédé selon l'une des revendications 1 à 12, dans lequel un produit (2, 21) peut être fabriqué couche par couche (12-15, 20, 22) à partir d'un matériau pouvant être réalisé de façon stratifiée au moyen de ce rayon (8) pouvant être guidé grâce à un ensemble de données de commande,
dans lequel le dispositif (11) présente
- un moyen pour entrer (23) un ensemble de données de géométrie théorique de produit, qui représente la géométrie théorique du produit à fabriquer (2, 21), et
- un moyen pour générer (25) l'ensemble de données de commande à partir de l'ensemble de données de géométrie théorique de produit,
- un moyen pour définir (24) un ensemble de données de compensation et/ou une fonction de compensation en vue de la compensation des influences sur le plan de la production dues au frittage et/ou à la coulée et
- un moyen pour combiner (25) l'ensemble de données de compensation et/ou utiliser la fonction de compensation sur l'ensemble de données de géométrie théorique de produit pour générer l'ensemble de données de commande,
**caractérisé en ce que** les moyens pour définir l'ensemble de données de compensation et/ou la fonction de compensation sont réalisés pour calculer l'ensemble de données de compensation ou la fonction de compensation avant le début du processus de frittage et/ou de coulée sans matrice à partir des données de valeur théorique et le cas échéant à partir d'au moins un paramètre de fabrication.

15. Dispositif de fabrication de produits métalliques et/ou non métalliques (2, 21), en particulier des produits dentaires ou des produits médicaux, par frittage et/ou coulée sans matrice au moyen d'un rayon hautement énergétique (8), en particulier un rayon laser ou un faisceau d'électrons, dans lequel le dispositif présente :
- une source de rayons (7), en particulier un laser ou une source de faisceau d'électrons, pour générer ce rayon (8),
- une plate-forme (4) pour recevoir un matériau réalisé de façon stratifiée (6) et
- une commande (11) pour commander le rayon (8), au moyen de laquelle le rayon (8) peut être guidé commandé par les données, afin de réaliser un produit à partir du matériau (6) couche par couches (12-15, 20, 22),
**caractérisé en ce que** la commande (11) présente un dispositif pour générer des données de commande selon la revendication 14 pour guider le rayon (8).
